Europäisches Patentamt

European Patent Office

Office européen des brevets

(11) Numéro de publication: **0 225 216**
**A1**

## (12) DEMANDE DE BREVET EUROPEEN

(21) Numéro de dépôt: **86402342.9**

(22) Date de dépôt: **20.10.86**

(51) Int. Cl.⁴: **G 01 L 9/12**
**G 01 L 13/04**

(30) Priorité: **22.10.85 FR 8515633**

(43) Date de publication de la demande:
**10.06.87 Bulletin 87/24**

(84) Etats contractants désignés:
**AT BE CH DE ES FR GB GR IT LI LU NL SE**

(71) Demandeur: **Bouthors-Montin, Danièle**
**1, allée Hélène Boucher**
**F-95250 Beauchamp (FR)**

(72) Inventeur: **Bouthors-Montin, Danièle**
**1, allée Hélène Boucher**
**F-95250 Beauchamp (FR)**

(54) **Manomètre différentiel de faible pression de fluides gazeux.**

(57) L'invention concerne un appareil de mesure électronique de faible pression différentielle de fluide gazeux pour la transmission, la centralisation et la lecture des mesures.

Il est constitué d'un boitier étanche, à façade transparente, cloisonné verticalement et en partie pour former deux compartiments identiques (1) et (2) et faire prendre au volume intérieur la forme d'un "U" rempli par moitié d'un liquide isolant et amagnétique (5) immergeant deux capteurs capacitifs (4) et (7), gradués verticalement pour permettre l'étalonnage du dispositif sans appareil de mesure et contrôler le bon fonctionnement de l'appareil par la concordance de deux mesures. Les lectures sont effectuées, d'une part, par transparence, selon la hauteur des niveaux du liquide sur les graduations des condensateurs et, d'autre part, sur les afficheurs d'un système de mesure électronique relié aux condensateurs. Ces deux moyens permettent de mesurer la valeur différentielle de la pression des fluides gazeux introduits par des orifices placés sur la partie supérieure de chacun des compartiments, et d'étalonner l'appareil sans instrument de mesure.

EP 0 225 216 A1

## Description

### MANOMETRE DIFFERENTIEL DE FAIBLE PRESSION DE FLUIDES GAZEUX

La présente invention concerne les systèmes de mesure des faibles pressions différentielles de fluides gazeux.

Dans les autres dispositifs connus de ce genre, la mesure est effectuée sur place au moyen de manomètres à tubes en verre en forme de "U" avec lecture directe sur des échelles graduées ou avec des appareils munis d'indicateurs à aiguilles. Ces appareils obligent les utilisateurs à se rendre, sur des emplacements difficiles d'accès, pour relever les mesures.

D'autres appareils font appel à la déformation élastique de membranes pour capter et mesurer la différence de pression selon la valeur de l'amplitude des déformations. Ces appareils fragiles ont des mesures instables du fait de leur dérive dans le temps.

Le dipositif, objet du brevet français N° 1.422.264, fait appel à la variation de capacité d'un seul condensateur, placé dans un tube en "U", immergé par moitié dans un liquide diélectrique et influencé par un seul des deux niveaux du liquide. Cet appareil reste relativement imprécis par le fait que les variations de température qui interviennent sur le volume et les caractèristiques du diélectrique, ne sont pas compensées.

Le dipositif, object du brevet U.S. N° 4.462.259, fait appel, pour capter la mesure, à deux condensateurs dont les armatures, placés dans une seule cuve, font prendre au volume intérieur de cette cuve la forme d'un "U" dans lequel se déplace un liquide diélectrique magnétique maintenu sur une position de référence par un aimant, la pression exercée par les fluides gazeux devant entrer en opposition avec cet état.

Les inconvénients d'un tel système résident dans le fait que la liberté des mouvements d'amplitude du liquide, provoqués par les variations de pression des fluides gazeux, est soumise à l'influence du champ magnétique d'un aimant, que ce système est tributaire des variations du champ magnétique et de la désaimantation de l'aimant dans le temps, qu'il peut être influencé par par des champs magnétiques parasites ou/et certains métaux se trouvant dans son environnement, qu'il doit supporter l'instabilité des particules magnétiques qui sont intégrées dans le liquide et peuvent mettre l'appareil hors d'usage du fait de leur possibilité de fixation, sous forme de dépôt, sous l'action du champ magnétique de l'aimant, de plus, le manque de linéarité d'un tel système ne permet pas de faire ressortir des mesures précises et fiables.

Le dispositif selon l'invention permet d'éviter tous ces inconvénients, par l'utilisation, dans deux compartiments distincts, de deux condensateurs occupant la moitié de la hauteur de chaque compartiment et immergés dans un liquide diélectrique amagnétique, au repos, l'un au 1/10 ème, l'autre au 9/10 ème environ de leur hauteur, la valeur de leur capacité variant en sens inverse selon la hauteur de leur niveau d'immersion dans le liquide. Cette solution qui permet de multiplier par quatre environ la sensibilité et la précision de la mesure, par rapport à un capteur de même type placé dans une seule cuve sur toute la hauteur de celle-ci, permet aussi de compenser directement les variations de température de l'appareil, l'action de cette température sur le volume du liquide ne modifiant pas hauteur manomètrique entre les deux niveaux.

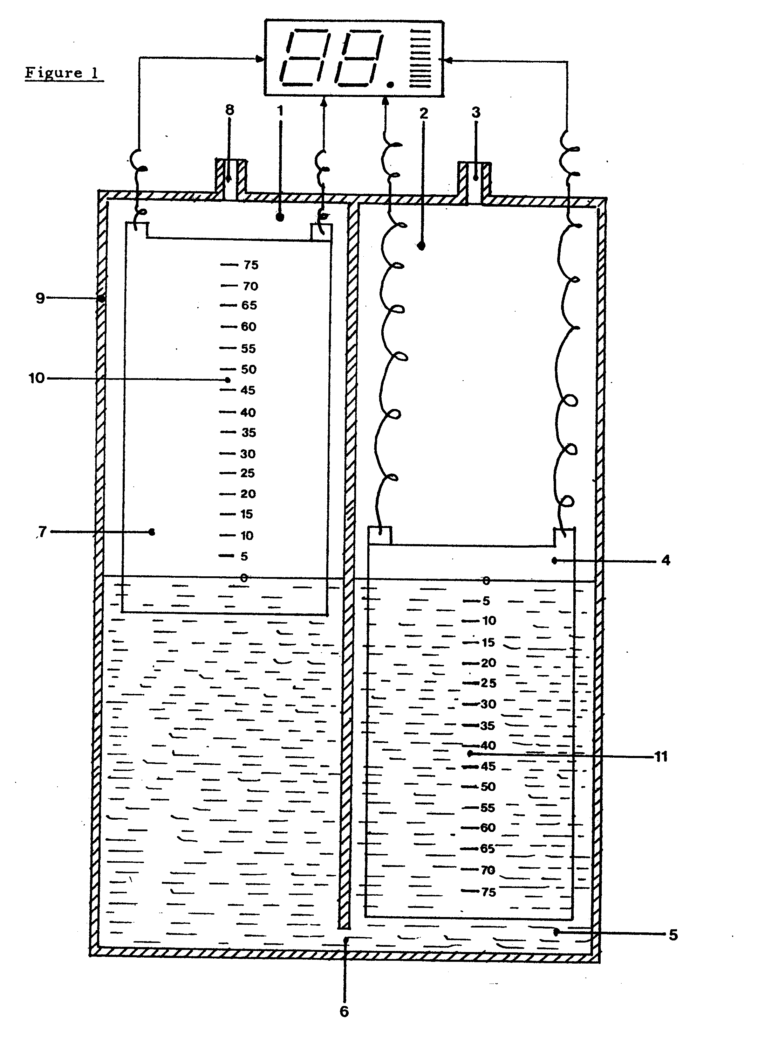

Le capteur est constitué figure 1 :

d'une part, d'un boitier étanche (9) divisé en deux compartiments identiques et transparents (1) et (2) pour permettre de voir les éléments placés à l'intérieur. Ils forment tube en "U" et sont remplis à moitié d'un liquide isolant (5). Ils communiquent par le bas (6) et sont percés de deux orifices dans le haut (3) et (8) pour permettre l'arrivée des fluides gazeux.

D'autre part, de deux condensateurs (4) et (7) constitués de plaques conductrices graduées verticalement. Celles-ci forment les armatures des condensateurs fixés dans les compartiments, l'un à un niveau bas immergé, au repos, à 9/10 ème environ (4), l'autre à un niveau haut immergé, au repos, à 1/10 ème environ (7). Le liquide et le fluide gazeux qui forment les diélectriques des condensateurs circulent entre les plaques mais tandis que les fluides gazeux exercent leur pression sur chacun des niveaux du liquide à l'intérieur des compartiments, le liquide se déplace d'un compartiment dans l'autre selon les variations de ces pressions, la transparence des compartiments permettant de relevé les mesures différentielles selon la hauteur des deux niveaux par rapport aux graduations placées verticalement et en concordance sur chacun des deux condensateurs.

En se référant à la figure 1, le fluide ayant une pression maximum penètre par l'orifice (3) et celui ayant la pression minimum par l'orifice (8). La différence de pression fait varier les niveaux proportionnellement à cette différence ce qui a pour effet de modifier la valeur des condensateurs dans les mêmes proportions par variation de la permitivité du diélectrique.

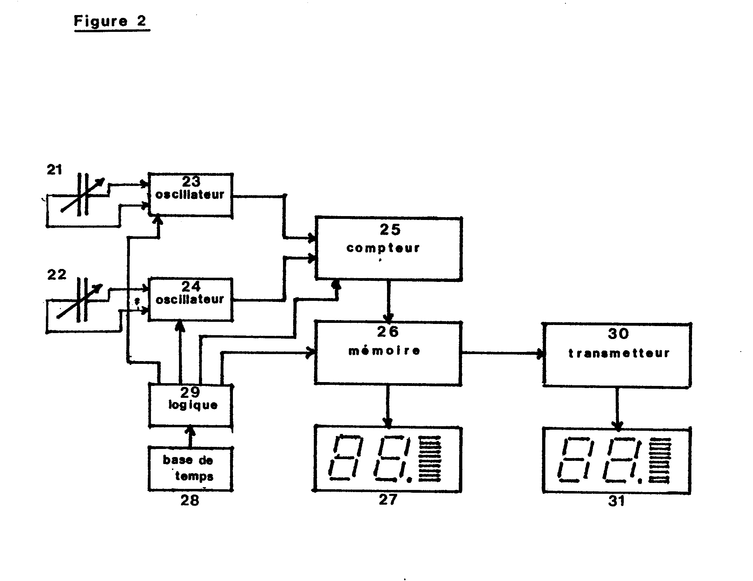

Les variations de capacité sont exploitées par un ensemble électronique fig 2, comportant deux multivibrateurs astables à courant de charge et de décharge constant (23 et 24) connectés sur les condensateurs (21 et 22) et qui délivrent leurs impulsions à des compteurs-décompteurs décimaux (25).

La mesure numérique ainsi effectuée est mise en mémoire (26) et transmise à un affichage numérique avec décimale mobile sur échelle graduée (27) et/ou à distance (31) par un système de transmission de données (30). L'ensemble qui est piloté par une unité logique (29), suivant une base de temps (28), fonctionne de la façon suivante :

-1er temps : remise à zéro des compteurs-décompteurs;

-2ème temps : comptage de la fréquence rapide;

-3ème temps : décomptage de la fréquence lente;

-4ème temps : mise en mémoire et affichage de la mesure.

Le système de transmission de données peut, à tout moment, transmettre la mesure présente dans la mémoire.

Les temps de comptage et de décomptage sont égaux mais règlables, ce qui permet de faire varier la pente du système de façon à ajuster celle-ci à l'unité de mesure et au liquide choisi.

Le zéro est obtenu par callage des multivibrateurs astables sur la même fréquence lorsque les compartiments sont en équipression.

Le fait de pouvoir effectuer la lecture de la mesure directement par transparence sur les graduations des condensateurs, et de pouvoir faire une seconde lecture sur des afficheurs, après reproduction numérique électronique de cette mesure, permet un contrôle permanent et instantané du bon fonctionnement de l'appareil et/ou son étalonnage sur son lieu d'utilisation sans devoir faire appel à du matériel de mesure étalon.

## Revendications

1) Manomètre différentiel de faible pression de fluide gazeux caractérisé par le fait qu'il est réalisé au moyen d'un boitier étanche et transparent (9) comportant deux compartiments identiques (1 et 2) dans chacun desquels est fixé un condensateur électrique (4 et 7) constitué au moyen de plaques conductrices disposées face à face et espacées parallèlement les unes des autres, pour permettre la libre ciculation des fluides.

Un orifice (3 et 8) permettant l'entrée des fluides gazeux est placé sur la partie supérieure de chacun des deux compartiments qui communiquent entre eux par le bas (6) pour prendre la forme d'un tube en "U" et permettre le libre passage, selon le principe des vases communicants, d'un liquide isolant (5) remplissant les deux compartiments du boitier jusqu'à la moitié de leur volume intérieur.

2) Manomètre, selon revendication 1, caractérisé par le fait qu'il possède deux compartiments transparents permettant de voir les colonnes de liquide.

3) Dispositif, selon revendication 1, caractérisé par le fait que chacun des deux condensateurs capacitifs sont gradués (10 et 11).

4) Dispositif. selon revendication 3, caractérisé par le fait que les graduations sont placées verticalement sur chacun des condensateurs capacitifs, en concordance et hauteur égale, pour permettre l'étalonnage de l'appareil par transparence, sans appareil de mesure.

5) Dispositif, selon revendication 1, caractérisé par le fait que les condensateurs placés à l'intérieur des compartiments sont immergés. au repos, l'un à 1/10 ème l'autre à 9/10 ème, environ, de leur hauteur. dans le liquide circulant librement dans et entre les compartiments sous l'unique influence des pressions des fluides gazeux dont la différence doit être mesurée.

6) Dispositif, selon revendication 1 et 5, caractérisé par le fait que les condensateurs sont placés à l'intérieur de compartiments distincts et par là-même, sont, inversement et proportionnellement, plus ou moins immergés au cours des déplacements de la totalité du volume du liquide dans et entre les compartiments, déplacements effectués sous l'influence des variations de pressions exercées par les fluides gazeux en provenance des orifices prévus à cet effet. Le fluide ayant le maximum de pression étant, par voie de concordance, dirigé vers le condensateur immergé au 9/10 ème, tandis que le fluide ayant le minimum de pression sera dirigé vers le condensateur immergé au 1/10 ème dans le liquide.

7) Dispositif, selon revendication 1 et 5, caractérisé par le fait que les condensateurs sont immergés dans un volume de liquide isolant et amagnétique circulant entre les compartiments et, par là-même, influencés séparément par le balancement, inversement proportionnel, des deux niveaux du liquide multipliant par quatre environ la sensibilité et la précision par rapport à un condensateur occupant toute la hauteur d'un compartiment, immergé sur la moitié de sa hauteur, et soumis aux variations d'un seul niveau du liquide.

8) Dispositif, selon revendication 7, caractérisé par le fait qu'il utilise un liquide isolant et amagnétique le libèrant de toutes les contraintes extérieures autres que celle de la variation de la température de l'appareil. Celle-ci provoque la dilatation ou la rétraction et/ou une variation des caractéristiques du diélectrique, mais l'influence de ces variations s'exerçant de la même façon sur chacun des condensateurs est annulée par une mesure différentielle des condensateurs

9) Dispositif, selon revendications 1 - 5 et 6, caractérisé par le fait que les variations de capacité des condensateurs (21 et 22) sont, figure 2, exploitées par deux multivibrateurs astables à charge et décharge à courant constant (23 et 24) permettant la mesure en valeur numérique directe par comptage et décomptage de leurs oscillations dans un compteur (25) et la sauvegarde de cette mesure dans une mémoire (26). L'affichage numérique, avec décimale mobile sur échelle graduée, est réalisé sur place (27) et/ou à distance (31). par l'intermédiaire d'un transmetteur (30). L'ensemble est piloté par une unité logique (29) suivant une base de temps fixe (28) et d'une façon séquentielle : 1° Remise à zéro du compteur, 2° Comptage de la fréquence rapide, 3° Décomptage de la fréquence lente, 4° Mise en mémoire et affichage de la mesure.

10) Dispositif caractérisé par le fait, que selon les revendications 2-3 et 4, la mesure physique est lisible sur les condensateurs gradués, que cette lecture est reproduite, selon la revendication (9), par un système de mesure électronique relié aux condensateurs capacitifs et que la concordance des mesures, par ces deux moyens de lecture, permet d'étalonner et de contrôler le bon fonctionnement du manomètre sans appareil de mesure. Le fait d'avoir la décimale mobile sur une échelle graduée permet de voir instantanément le sens de la variation de la mesure.

0225216

Figure 1

**Figure 2**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,Y | FR-A-1 422 264  (COMMISSARIAT A L'ENERGIE ATOMIQUE) <br> * En entier * | 1,2 | G 01 L    9/12 <br> G 01 L   13/04 |
| | --- | | |
| D,Y | US-A-4 462 259  (D.D. STOLTMAN et al.) <br> * En entier * | 1,2 | |
| | --- | | |
| A | EP-A-0 060 418  (HONEYWELL INC.) <br> * Résumé; figures * | 1 | |
| | ----- | | |

**DOMAINES TECHNIQUES RECHERCHES (Int. Cl.4)**

G 01 L    9
G 01 L   13

Le présent rapport de recherche a été établi pour toutes les revendications

| Lieu de la recherche | Date d'achèvement de la recherche | Examinateur |
|---|---|---|
| LA HAYE | 19-01-1987 | VAN ASSCHE P.O. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié a la date de dépôt ou après cette date
D : cité dans la demande
L : cité pour d'autres raisons

& : membre de la même famille, document correspondant

OEB Form 1503 03 82